(19) Europäisches Patentamt
European Patent Office
Office européen des brevets

(11) Publication number: 0 217 480 B1

(12) **EUROPEAN PATENT SPECIFICATION**

(45) Date of publication of the patent specification: **19.09.90**

(51) Int. Cl.⁵: **B01D 53/36,** B01J 29/06

(21) Application number: **86301402.3**

(22) Date of filing: **27.02.86**

(54) **Abatement of NOx in exhaust gases.**

(30) Priority: **08.08.85 US 763582**

(43) Date of publication of application: **08.04.87 Bulletin 87/15**

(45) Publication of the grant of the patent: **19.09.90 Bulletin 90/38**

(84) Designated Contracting States: **BE DE FR GB IT NL**

(56) References cited:
**EP-A- 0 128 721**
**GB-A- 2 017 520**

(73) Proprietor: **MOBIL OIL CORPORATION, 150 East 42nd Street, New York New York 10017(US)**

(72) Inventor: **Killany, Thomas Richard, Jr., 704 East Waring Street Apt. 147, Dayton Texas 77535(US)**
Inventor: **Sigal, Catherine Teague, 120 East Delaware Avenue, Pennington New Jersey 08534(US)**
Inventor: **McWilliams, John Paul, 117 South American Street, Woodbury New Jersey 08096(US)**
Inventor: **Pappal, David Andrew, 12 Palmer Court, Sewell New Jersey 08080(US)**

(74) Representative: **Cooper, John Anthony et al, Mobil Court 3 Clements Inn, London WC2A 2EB(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 217 480 B1

ACTORUM AG

## Description

This invention is concerned with the abatement of nitrogen oxides in industrial exhaust gases. In particular, it is concerned with a catalytic method for efficiently reacting the nitrogen oxides with ammonia before discharge to the atmosphere.

Although several nitrogen oxides are known which are relatively stable at ambient conditions, it is generally recognized that two of these, viz. nitric oxide (NO) and nitrogen dioxide ($NO_2$), are the principle contributors to smog and other undesirable environmental effects when they are discharged into the atmosphere. These effects will not be discussed further here since they are well recognized and have led various government authorities to restrict industrial emissions in an attempt to limit the level of the oxides in the atmosphere. Nitric oxide and nitrogen dioxide, under appropriate conditions, are interconvertible according to the equation

$$2NO + O_2 = 2NO_2.$$

For purposes of the present invention, $NO_x$ will be used herein to represent nitric oxide, nitrogen dioxide, and mixtures thereof.

Formation of man-made nitrogen oxides from the elements occurs in the high temperature zones of combustion processes. The internal combustion engine, and coal or air-fired furnaces, boilers and incinerators, all contribute to $NO_x$ emissions. In general, fuel-rich combustion mixtures produce exhaust gases with lower contents of $NO_x$ than do lean mixtures. Although the concentrations of $NO_x$ in the exhaust gases produced by combustion usually are low, the aggregate amounts discharged in industrial and/or highly populated areas is adequate to cause problems. Other industrial sources of pollution also exist. These are associated with the manufacture of nitric acid, with nitration of organic chemicals, and with other chemical operations such as the reprocessing of spent nuclear fuel rods by dissolution in nitric acid to recover uranyl nitrate followed by calcination to convert the nitrate to uranium oxide. In these instances the waste gases may contain relatively high levels of $NO_x$, such as from 0.1% up to 2% to 3%.

The so-called "stable" nitrogen oxides have in common the somewhat peculiar property that although they are thermodynamically very unstable with respect to decomposition into elemental oxygen and nitrogen, no simple, economical method has been described for inducing this decomposition. It has been discovered, however, that adding a reductant such as ammonia to the exhaust gas can, under appropriate reaction conditions, convert $NO_x$ to elemental nitrogen and steam.

US-A 3 900 554 to Lyon describes a homogeneous gas phase reaction to remove $NO_x$ from combustion effluents by adding 0.4 to 10 mols (preferably 0.5 to 1.5 mols) of ammonia followed by heating to 1600°C to 2000°C. The $NO_x$ content is lowered as a result of its being reduced to nitrogen by reaction with ammonia. The method is reported to work best if hydrocarbon is also added to the mixture.

US-A 4 220 632 to Pence et al. discloses a process for reducing noxious nitrogen oxides from a fossil-fuel-fired power generation plant, or from other industrial plant off-gas stream, to elemental nitrogen and/or innocuous nitrogen oxides employing ammonia as reductant and, as catalyst, the hydrogen or sodium form of a zeolite having pore openings of about (3 to 10) $\times 10^{-4}$ µm.

GB-A 2 017 520 describes a process for reducing nitrogen oxides in industrial exhaust gases. The process comprises contacting the exhaust gas with a synthetic zeolite molecular sieve such as ZSM-5.

This reduction proceeds approximately according to equations (1) and (2).

$$(1) \quad 2NO_2 + 4NH_3 + O_2 = 3N_2 + 6H_2O$$
$$(2) \quad 4NO + 4NH_3 + O_2 = 4N_2 + 6H_2O$$

The present invention provides a process for treating an industrial exhaust gas contaminated with $NO_x$ by mixing the exhaust gas and ammonia, in an amount to satisfy approximately the stoichiometric requirement for reduction of the $NO_x$ by $NH_3$ and passing the mixture over a zeolite catalyst at 200 to 600°C to reduce the $NO_x$ content, the zeolite having a silica to alumina ratio of at least 50 and a Constraint Index of 1 to 12, characterized by using a commercial spent organic conversion zeolite catalyst.

Figure 1 illustrates laboratory apparatus for testing catalyst.
Figure 2 is a schematic diagram of a pilot plant $NO_x$ abatement unit.
Figure 3 shows inlet $NO_x$ concentration to pilot abatement unit.
Figure 4 shows effluent $NO_x$ concentration from pilot abatement unit.
Figure 5 shows effluent $NO_x$ concentration from pilot abatement unit.
Figure 6 – Emissions v. Loading, 2 cycle engine.

The term "industrial exhaust gas" as used herein means any waste gas which is formed in an industrial process or operation and which is normally disposed of by discharge to the atmosphere. The composition of such a gas varies and depends on the particular process or operation which leads to its formation.

When formed in the combustion of fossil fuels, it will generally contain nitrogen, steam and carbon dioxide in addition to low levels, such as up to about 1000 ppm, of nitric oxide plus nitrogen dioxide. Sulfur-containing fuels will produce an exhaust gas that contains some $SO_2$. Rich fuel-air mixtures will generally produce an exhaust gas that contains little if any free oxygen, and some carbon monoxide. Lean fuel air mixtures, i.e. mixtures in which more air is provided than is stoichiometrically required to completely combust the fuel, will form an exhaust gas that contains gaseous oxygen. The foregoing is a general description given to illustrate the variability in the composition of the exhaust gases from fossil fuel combustion. Other industrial processes such as nitration, uranium recovery, and calcining nitrate salt-containing solids produce exhaust gases which can have compositions different from those noted above. They may be substantially devoid of steam, for example, and may contain very high concentrations of nitrogen or other inert gases.

The process of this invention requires that the $NO_x$-contaminated exhaust gas be mixed at a temperature of at least about 200°C with gaseous ammonia. That this mixture be formed at elevated temperature is important to avoid the formation of solid ammonium nitrite or nitrate, which is potentially hazardous. The amount of ammonia included in the mixture should be approximately the amount required to stoichiometrically react with the $NO_x$ present in the exhaust gases. If the mixture of ammonia and exhaust gas contains oxygen in an amount which at least satisfies the stoichiometry of Equations (1) and (2) shown above, then the stoichiometry is that given by those equations. In the event that the exhaust gas contains less oxygen than required by (1) and (2), it is preferred to add at least the required oxygen, although this invention is operable even with a deficiency of oxygen. With a deficiency, however, the stoichiometry changes, requiring somewhat less ammonia. This is illustrated by equations (3) and (4), which represent the stoichiometry in the total absence of oxygen.

$$6NO_2 + 8NH_3 = 7N_2 + 12H_2O \quad (3)$$
$$6NO + 4NH_3 = 5N_2 + 6H_2O \quad (4)$$

As used herein, the expression "approximate stoichiometric amount of ammonia" is intended to mean about 0.75 to about 1.25 the molar amount of ammonia indicated in equations (1) and (2) when excess oxygen is present, these amounts being adjusted to reflect the somewhat lesser demand when operating with a deficiency of oxygen.

The mixture formed as described above is contacted with a crystalline zeolite molecular sieve catalyst having the properties described above. Crystalline zeolites are a known type of inorganic solid, and are described in Breck, "Zeolite Molecular Sieves", John Wiley and Sons, N.Y., N.Y. (1974).

Contacting is conducted at a temperature of 200°C to 600°C, and preferably at 250°C to 550°C, and at a gas hourly space velocity (volumes of gas at Standard Temperature and Pressure, STP, per volume of catalyst per hour) adjusted to provide the desired conversion. The GHSV can be from 750 to 20,000 $h^{-1}$, and preferably from 1000 to 7500$h^{-1}$.

In general, since the reaction is exothermic but low concentrations of $NO_x$ are present, adequate temperature control is readily achieved with a simple stationary fixed-bed of catalyst. However, other contacting means are contemplated, such as contacting with a fixed fluid bed, a transport bed, and a monolithic catalyst structure such as a honeycomb. The process of this invention is operable at subatmospheric to superatmospheric pressure, e.g. at 34.5 to 3445 kPa (5 to 500 psia), and preferably at 69 to 345 kPa (10 to 50 psia), i.e. near atmospheric pressure.

The catalyst useful in this invention will now be described in detail. It comprises an intermediate pore size zeolite having a silica to alumina ratio of at least about 50 and a Constraint Index of 1 to 12. The Constraint Index qualifies it as having an intermediate pore size, as will be more fully described below. Examples of such zeolites include ZSM-5, ZSM-11, ZSM-12, ZSM-21, ZSM- 23, ZSM-35, ZSM-38 and ZSM-48. Such zeolites are sometimes referred to as of the ZSM-5 type, and this term will be sometimes used herein to designate the zeolites useful in this invention.

The ZSM-5 type zeolites are members of a novel class of zeolites that exhibit unusual properties. Although these zeolites have unusually low alumina contents, i.e. high silica to alumina ratios, they are active for converting organic compounds. The activity is surprising since catalytic activity is generally attributed to framework aluminum atoms and/or cations associated with these aluminum atoms. These zeolites have an intracrystalline sorption capacity for normal hexane which is greater than that for water, i.e. they exhibit "hydrophobic" properties.

An important characteristic of the crystal structure of this class of zeolites is that it provides constrained access to and egress from the intracrystalline free space by virtue of having an effective pore size intermediate between the small pore Linde A and the large pore Linde X, i.e. the pore windows of the structure have about a size such as would be provided by 10-membered rings of oxygen atoms. It is to be understood, of course, that these rings are those formed by the regular disposition of the tetrahedra making up the anionic framework of the crystalline aluminosilicate, the oxygen atoms themselves being bonded to the silicon or aluminum atoms at the centers of the tetrahedra.

The silica to alumina ratio referred to may be determined by conventional analysis. This ratio is meant to represent, as closely as possible, the ratio in the rigid anionic framework of the zeolite crystal and to exclude aluminum in the binder or in cationic or other form within the channels.

The ZSM-5 type zeolites referred to herein have an effective pore size such as to freely sorb normal hexane. In addition, the structure must provide constrained access to larger molecules. It is sometimes possible to judge from a known crystal structure whether such constrained access exists. For example, if the only pore windows in a crystal are formed by 8-membered rings of oxygen atoms, then access to molecules of larger cross-section than normal hexane is excluded and the zeolite is not of the ZSM-5 type. Windows of 10- membered rings are preferred, although in some instances excessive puckering of the rings or pore blockage may render these zeolites ineffective.

Rather than attempt to judge from crystal structure whether or not a zeolite possesses the necessary constrained access to molecules larger than normal paraffins, a simple determination of the "Constraint Index", or C.I., may be made by passing continuously a mixture of an equal weight of normal hexane and 3-methylpentane over a small sample, approximately one gram or less, of zeolite at atmospheric pressure and elevated temperature. After 20 minutes on stream, a sample of the effluent is taken and analyzed, most conveniently by gas chromatography, to determine the fraction remaining unchanged for each of the two hydrocarbons.

The C.I. is calculated as follows:

$$C.I. = \frac{\log\ (\text{fraction of n-hexane remaining})}{\log\ (\text{fraction of 3-methylpentane remaining})}$$

The Constraint Index approximates the ratio of the cracking rate constants for the two hydrocarbons. Zeolites suitable for the present invention are those having a Constraint Index of 1 to 12. C.I. values for some typical zeolites are:

TABLE I

| CAS | C. I. |
|---|---|
| ZSM-4 | 0.5 |
| ZSM-5 | 8.3 |
| ZSM-11 | 8.7 |
| ZSM-12 | 2 |
| ZSM-23 | 9.1 |
| ZSM-35 | 4.5 |
| ZSM-38 | 2 |
| TMA Offretite | 3.7 |
| Beta | 0.6 |
| H-Zeolon (mordenite) | 0.4 |
| REY | 0.4 |
| Amorphous Silica-Alumina | 0.6 |
| Erionite | 38 |

Constraint Index seems to vary somewhat with severity of operation (conversion) and the presence or absence of binders. Therefore, it will be appreciated that it may be possible to so select test conditions to establish more than one value in the range of 1 to 12 for the Constraint Index of a particular zeolite. Such a zeolite exhibits the constrained access as herein defined and is to be regarded as having a Constraint Index of 1 to 12. Also contemplated herein as having a Constraint Index of 1 to 12 and therefore within the scope of the novel class of highly siliceous zeolites are those zeolites which, when tested under two or more sets of conditions within the above-specified ranges of temperature and conversion, produce a value of the Constraint Index slightly less than 1, e.g. 0.9, or somewhat greater than 12, e.g. 14 or 15, with at least one other value of 1 to 12. Thus, it should be understood that the Constraint Index value as used herein is an inclusive rather than an exclusive value. That is, a zeolite when tested by any combination of conditions within the testing definition set forth hereinabove and found to have a Constraint Index of 1 to 12 is intended to be included in the instant catalyst definition regardless that the same identical zeolite tested under other defined conditions may give a Constraint Index value outside of 1 to 12.

For ZSM-5 type zeolites of very high silica to alumina ratio, such as 1600:1, the Constraint Index cannot be measured reliably because of the low activity of the zeolite. In such cases reliance on X-ray pattern is useful.

The class of zeolites defined herein is exemplified by ZSM-5, ZSM-11, ZSM-12, ZSM-21, ZSM-23, ZSM-35, ZSM-38, ZSM- 48, and other similar materials.

ZSM-5 is described in US-A 3,702,886.

ZSM-11 is described in US-A 3,709,979.
ZSM-12 is described in US-A 3,832,449.
ZSM-21 is described in US-A 4,046,859.
ZSM-23 is described in US-A 4,076,842.
ZSM-35 is described in US-A 4,016,245.
ZSM-38 is described in US-A 4,046,859.

The specific zeolites described, when prepared in the presence of organic cations, are substantially catalytically inactive, possibly because the intra-crystalline free space is occupied by organic cations from the forming solution. These cations are preferably removed by heating in an inert atmosphere at 538°C (1000°F) for one hour, for example, followed by base exchange with ammonium salts followed by calcination at, e.g., 538°C (1000°F) in air.

The ZSM-5 type zeolites referred to herein have a crystal framework density, in the dry hydrogen form, of not less than about 1.6 grams per cubic centimeter. The dry density for known crystal structures may be calculated from the number of silicon plus aluminum atoms per 1000 cubic Angstroms, as given, e.g., on Page 19 of the article on Zeolite Structure by W. M. Meier. This paper, the entire contents of which are incorporated herein by reference, is included in "Proceedings of the Conference on Molecular Sieves, London, April 1967," published by the Society of Chemical Industry, London, 1968.

Crystal framework densities of some typical zeolites, including some which are not within the purview of this invention, are:

TABLE II

| Zeolite | Void Volume | Framework Density |
|---|---|---|
| Ferrierite | 0.28 $cm^3/cm^3$ | 1.76 $g/cm^3$ |
| Mordenite | .28 | 1.7 |
| ZSM-5, 11 | .29 | 1.79 |
| ZSM-12 | - | 1.8 |
| ZSM-23 | - | 2.0 |
| Dachiardite | .32 | 1.72 |
| L | .32 | 1.61 |
| Clinoptilolite | .34 | 1.71 |
| Laumontite | .34 | 1.77 |
| ZSM-4, Omega | .38 | 1.65 |
| Heulandite | .39 | 1.69 |
| P | .41 | 1.57 |
| Offretite | .40 | 1.55 |
| Levynite | .40 | 1.54 |
| Erionite | .35 | 1.51 |
| Gmelinite | .44 | 1.46 |
| Chabazite | .47 | 1.45 |
| A | .5 | 1.3 |
| Y | .48 | 1.27 |

The ZSM-5 zeolites may be incorporated in another material usually referred to as a matrix or binder. Such matrix materials include synthetic or naturally occuring substances as well as inorganic materials

such as clay, silica and/or metal oxides. The latter may be either naturally occurring or in the form of gelatinous precipitates or gels including mixtures of silica and metal oxides. Naturally occurring clays which can be composited with the zeolite include those of the montmorillonite and kaolin families, which families include the sub-bentonites and the kaolins commonly known as Dixie, McNamee, Georgia and Florida clays or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, the zeolites employed herein may be composited with a porous matrix material, such as alumina, silica-alumina and silica-magnesia. The matrix may be in the form of a cogel. The relative proportions of zeolite component and inorganic oxide gel matrix on an anhydrous basis may vary widely with the zeolite content ranging from between about 5 to about 99 percent by weight and more usually in the range of about 10 to about 80 percent by weight of the dry composite.

The ZSM-5 type zeolites, in the hydrogen form and in certain divalent metal or polyvalent metal-exchange forms, have acid catalytic activity. The term "acid catalytic activity" as used herein refers to the effectiveness of the zeolite, when in suitable form, for catalyzing reactions known to be promoted by so-called acid catalysts. Catalytic cracking, hydrocracking, skelatal isomerization, catalytic dewaxing, and various aromatic hydrocarbon reactions such as alkylation, dealkylation, isomerization and disproportionation, are hydrocarbon conversion reactions which fall in the category of acid catalyzed reactions. Other reactions, such as alcohol dehydration, are also in this class.

As is known in the art, the acid catalytic activity of a zeolite may be measured by its "alpha value", which is the ratio of the rate constant of a test sample for cracking normal hexane to the rate constant of a standard reference catalyst. Thus, an alpha value = 1 means that the test sample and the reference standard have about the same activity. The alpha test is described in U.S. Patent 3,354,078 and in The Journal of Catalysis, Vol. IV, pp. 522- 529 (August 1965), both of which are incorporated herein by reference. Measurement of the "alpha value" is useful to assess the extent of catalyst activity of fresh catalyst as well as used and spent catalysts. For this purposethe zeolite is converted to the hydrogen form before evaluation. This can be done by ammonium exchange and calcination, as described above for the alpha test.

It is known that zeolites may be ion-exchanged to convert them to various cation-exchanged forms. While it is contemplated that various ion-exchanged forms of ZSM-5-type zeolites can be useful in the present invention, the hydrogen form of ZSM-5 is preferred. It has been observed, e.g. with hydrogen-form ZSM-5 (i.e. HZSM-5) that the effect of adjusting the $NH_3$ concentration takes place with substantially no lapse of time. This is a distinct advantage from the point of view of automated abatement control since variations of $NO_x$ in the exhaust gas can be accommodated with minimum or no intermittent emissions of either unconverted $NO_x$ or excess $NH_3$. Of the ZSM-5 type catalysts, ZSM-5 predominantly in the hydrogen form is preferred. The catalyst, however, can contain about 1 wt% Ni or from 2 ppm to about 1 wt% platinum without loss of this fast response. Although adding to the cost of the catalyst, low levels of platinum with ZSM-5 appear to provide a substantial effect as promoter for $NO_x$ conversion.

In one aspect and embodiment of the present invention, ZSM-5 in the hydrogen form which has been previously used in an acid-catalyzed organic conversion reaction until it has become spent, i.e. not regenerable to an economically useful level, has been found to be very active for $NO_x$ abatement. For example, a dewaxing catalyst which is no longer useful, and has an alpha value of less than 40, was found very effective for catalytic $NO_x$ abatement. This empirical finding is not understood. Nonetheless, it provides an inexpensive source of $NO_x$ abatement catalyst. Carbon deposits that are on the spent catalyst should be removed by calcination prior to catalytic use in $NO_x$ abatement. The term "spent", as used herein, does not necessarily mean that the catalyst has no activity at all, but rather that its activity is reduced and/or its cycle life is reduced, and/or its selectivity is reduced, to the point where it should be discharged. Typically, a spent dewaxing catalyst, for example, has an alpha value of about 40 while the fresh catalyst had an alpha value of 65, and the spent catalyst has a reduced cycle time between regenerations.

In another embodiment of the present invention, the exhaust gases are provided by the calcination of a solid comprising a nitrate metal salt. The calcination may be conducted in the presence or absence of air.

In still another embodiment of this invention, the exhaust gases are provided by stationary internal combustion engines such as two cycle engines operating with a lean mixture of natural gas as fuel. The $NO_x$ content of the exhaust gases varies with the rate of feed of fuel, becoming substantial at high loadings. This is exemplified for a 1100 HP GMVA-8 gas compressor in Figure 6 of the drawing.

In still another embodiment of this invention, the exhaust gases are provided by the regenerator of a fluid catalytic cracking unit, such as described in US-A 4 072 600 to Schwartz. A representative exhaust gas composition is as follows:

| Constituent | wt% |
|---|---|
| $CO_2$ | 12 |
| $O_2$ | 6 |
| $H_2O$ | 15 |
| $N_2$ | 67 |
| | ppm (v) |
| $SO_2$ | 410 |
| $SO_3$ | 70 |
| $NO_x$ | 200 |
| CO | 1500 |

In this particular application, hydrogen form ZSM-5 is the preferred zeolite, although base exchange with a base metal such as chromium, maganese, cobalt, nickel, copper and platinum can be advantageous.

In one configuration, fluidizable particles of the NOx-reduction catalyst are injected into the flue gas duct from the regenerator and the ammonia required for the $NO_x$-reduction is added either at the same point or upstream of the point at which catalyst is injected. At an appropriate point downstream of the ammonia injection, after reduction of the $NO_x$, the particles are recovered by a cyclone separator or by an electrostatic precipitator, and the flue gas then is discharged. The particles are disposed of or recirculated.

In a second configuration the flue gas from the regenerator is passed from the flue gas duct of the regenerator to a moving bed or a fluid bed of the $NO_x$-reduction catalyst particles where $NO_x$-reduction occurs, and the flue gas is then discharged.

In a third configuration, the flue gas is mixed with the requisite ammonia according to this invention and the mixture passed parallel to the catalyst surface, said surface being provided disposing the catalyst in a honeycomb or layer configuration.

Regardless of which of the foregoing configurations is used, a particularly advantageous embodiment wherein flue gas from a catalytic cracking unit is treated according to this invention is that embodiment in which a spent ZSM-5 hydrocarbon conversion catalyst is used as the $NO_x$-reduction catalyst.

The following Examples illustrate the invention. However, only Examples 8 and 9 belong to the invention claimed, whilst Examples 1–7 are mentioned for comparative purposes.

## EXAMPLES

Examples 1-6 describe laboratory experiments. A schematic drawing of the apparatus used in these experiments is shown in Figure 1. From 10 to 40 cc of catalyst was placed in a 2.54 cm (one inch) diameter quartz tubular reactor which was heated by a Lindberg furnace. Mixtures of $NO_2$, air and $N_2$ entered the reactor through a common line. $NH_3$ was injected through a separate line into the preheated mixing zone in front of the catalyst bed. The mixing zone was maintained at a temperature of at least about 200°C to avoid ammonium nitrate formation. Drager tubes (not shown) were used to measure $NO_x$ and $NH_3$ concentrations. The amounts of ammonia and air used corresponded stoichiometrically to the following balanced equation

$$2NO_2+4NH_3+O_2 = 3N_2+6H_2O$$

### Example 1

In this experiment quartz chips were loaded into the reactor described above. At 266°C, even at low space velocity, no conversion of $NO_2$ was observed. The details and results are summarized in Table III.

### Example 2

This experiment was conducted with Zeolon 900H, a synthetic hydrogen mordenite obtained from the Norton Company in the form of 1.6 mm (1/16 inch) diameter extrudate. The extrudate had a silica to alumina ratio of about 12, it contained 450 ppm of sodium, and it had an alpha activity of 35. Hydrogen mordenite is a prior art catalyst. The details and results of this experiment are shown in Table III.

### Example 3

An $NH_4NaY$ powder was obtained from the Linde Air Products division of Union Carbide Corp. It had the composition $(NH_4)_9(Na)(Al_2O_3)_{10}(SiO_2)_{23}$. This was ammonium exchanged twice followed by air calcination to produce the hydrogen form. The calcined product had a sodium concentration of 1.7 wt% based on ash weight.

The powder was charged to the reactor and evaluated as described in Examples 1-3. The details and results of this experiment are shown in Table III.

TABLE III

Results, Examples 1-3

| Ex. Catalyst | Temp., °C | GHSV at 21°C | Inlet $NO_2$ Conc. | Outlet $NO_2$ Conc. | % Conv. |
|---|---|---|---|---|---|
| 1. Quartz Chips | 266 | 450 $h^{-1}$ | 750ppm | 750ppm | 0 |
| 2. H-Mordenite Extrudate | 282 | 2100 | 5000 | 600 | 88 |
| 3. HY Zeolite Powder | 302 | 1200 | 1500 | 15 | 99 |
| | 302 | 1700 | 2500 | 1 | 99 |
| | 302 | 4800 | 5000 | 5 | 99 |

Example 4

A hydrogen form ZSM-5 (HZSM-5) 1.6 mm (1/16 inch) extrudate containing 65 wt% zeolite and 35 wt% alumina binder was tested for effectiveness at 260°C, 302°C, 371°C and 427°C with the method described for Examples 1-3. The details of the experiment and the results are shown in Table IV.

TABLE IV: HZSM-5

| Temp., °C | GHSV at 21°C | Inlet $NO_2$ Conc., ppm | % Conv. |
|---|---|---|---|
| 260 | 460 $h^{-1}$ | 500-1000 | 98 |
| 302 | 5600 | 4000-3000 | 79 |
| 302 | 2000 | 1000-2000 | 95 |
| 302 | 1400 | 1000-2000 | 99 |
| 371 | 5600 | 3000-4000 | 57 |
| 427 | 460 | 1000-2000 | 99 |

Example 5

A ZSM-5 extrudate of the type used in Example 4, except that it contained about 1.0 wt% Ni (NiZSM-5), was tested as in Example 4. The details of the experiment and the results are shown in Table V.

TABLE V: NiZSM-5

| Temp., °C | GHSV at 70°F | Inlet $NO_2$ Conc., ppm | % Conv. |
|---|---|---|---|
| 260 | 250 $h^{-1}$ | 1000-2000 | 99 |
| 302 | 5000 | 3000-4000 | 71 |
| 302 | 2600 | 2000-3000 | 72 |
| 302 | 1500 | 1000-2000 | 99 |
| 371 | 5000 | 3000-4000 | 43 |
| 371 | 2600 | 4000-5000 | 80 |
| 427 | 250 | 1000-2000 | 99 |

Example 6

In this experiment a porous inorganic catalyst was impregnated with nitrate salt and dried. This preparation was used to generate $NO_x$ in a simulated calcination, and the exhaust gas was treated by the method of this invention. The $NO_x$ conversion catalyst was a ZSM-5 extrudate similar to that used in Example 4 except that it contained 0.6 wt% platinum (PtZSM-5).

The PtZSM-5 conversion catalyst (16 cc) was placed in the quartz tube as described in Examples 1-3, and the nitrate-containing catalyst was also placed in the quartz tube upstream of the PtZSM-5. Calcination was begun by raising the temperature in a stream of nitrogen and air but without addition of ammonia. The effluent $NO_x$ was measured, then $NH_3$ addition started, and the effluent $NO_x$ again observed.

The results of this experiment with the PtZSM-5 at 327°C and at 343°C are shown in Table IV. In each case the gas flow rate was 1200 Volumes/Vol. Catalyst/hr.

TABLE VI: ABATEMENT SIMULATION

| Temp. of PtZSM-5, °C | Effluent $NO_2$, ppm Without $NH_3$ | Effluent $NO_2$, ppm With $NH_3$ | Percent Conversion |
|---|---|---|---|
| 327 | 2000 | less than 2 | 99.9 plus |
| 343 | 1700 | less than 0.5 | 99.9 plus |

Example 7

This example describes the results of a test with a pilot abatement unit fed by $NO_x$-contaminated exhaust gas produced by a commercial retort. The commercial retort was used to calcine an inorganic catalyst impregnated with metal nitrate salt in order to convert the nitrate to oxide. This was done batchwise in a flow of nitrogen mixed with air. Each batch required about six hours to complete the calcination. During calcination, the exhaust gas composition increased in $NO_x$ content during the first three hours, and then decreased. (See e.g. Figure 3).

Figure 2 of the drawing is a schematic diagram of the pilot abatement unit. The exhaust from the calciner normally was discharged to the atmosphere via lines (1) and (3). To install the abatement unit, a 10.2 cm (4-inch) pipe (2) was joined to the stack to divert a portion of the exhaust which was fed via line (7) to a carbon-steel vessel (8) which contained the abatement catalyst (9). After passage through the catalyst, the treated exhaust gas was withdrawn via line (10) and (11), passed through eductor (12) and exhausted via stack (16). Steam for the eductor was provided via line (13), control valve (14) and line (15), and exhausted via stack (16). An air bleed flow control trim was provided by lines (17) and (18) and control valve (19). Provision for controlled ammonia addition were provided via line (4), valve (5) and line (6). Valves (20) and (21) provided for sampling the feed and product gases from vessel (8). Temperature was measured by a thermocouple (not shown in the drawing) located at the center of the catalyst bed.

A test of the effectiveness of the abatement unit was made by loading about 182 Kg (400 lbs.) of fresh NiZSM-5 catalyst onto a bed of alumina balls in vessel (8). The calciner was loaded with a batch of nitrate-containing catalyst and calcined in the usual manner in a stream of nitrogen mixed with air. The flow of ammonia was adjusted to suppress $NO_x$ emissions from the pilot unit by providing a slight excess of ammonia. The inlet and outlet $NO_x$ concentrations measured by EPA Method No. 7 are shown graphically in Figures 3 and 4 of the drawings. Also shown is the level of emissions allowable in the locality of the test, specified as an opacity limit and estimated to correspond to about 250 ppm of $NO_x$. The gases from the calciner consisted principally of nitrogen with about 4 to 5 volume percent of oxygen and the balance $NO_x$. It was estimated that the $NO_x$ contained about 2 mols of $NO_2$ per mol of NO.

Along with data obtained by the EPA Method No. 7, data was also obtained by chemiluminescent analysis and with Drager tubes. In general, the EPA Method gave $NO_x$ values which were slightly higher than chemiluminescent values up to 400 ppm, but the two methods diverged by a much as 50% at 2000 ppm. The reason for this is not understood at this time, and the discrepancy does not detract from the impressive performance of the pilot unit. The results obtained with the chemiluminescent method are shown in Table VII.

TABLE VII: (Example 7)

Chemiluminescent Method

| | Pilot Plant Inlet | | | Pilot Plant Outlet | |
|---|---|---|---|---|---|
| Elapsed Time | Gas Flow Rate $m^3/h$ (dscf/h)(1) | $NO_x$ ppm dry | $NO_x$ Kg/h (lb/h)(2) | $NO_x$ ppm dry | $NO_x$ Kg/h (lb/h)(2) |
| 0007 | 341.2 (12,048) | 22.5 | 0.015(0.032) | 2.5 | 0.0018(0.004) |
| 0030 | 341.2 (12,048) | 36 | 0.024(0.052) | 3.5 | 0.0023(0.005) |
| 0100 | 340.2 (12,013) | 148 | 0.096(0.212) | 6.5 | 0.004 (0.009) |
| 0130 | 333.2 (11,766) | 455 | 0.29 (0.639) | 26.5 | 0.017 (0.037) |
| 0200 | 338.1 (11,940) | 820 | 0.53 (1.17) | -NA- | -NA- |
| 0210 | 338.1 (11,940) | 930 | 0.60 (1.33) | 72 | 0.047 (0.103) |
| 0230 | 335.0 (11,831) | 1088 | 0.70 (1.54) | 24 | 0.015 (0.034) |
| 0236 | -NA- | -NA- | -NA- | 14.5 | 0.009 (0.020) |
| 0300 | 331.7 (11,715) | 1125 | 0.72 (1.57) | -NA- | -NA- |
| 0330 | 327.3 (11,558) | 1038 | 0.65 (1.43) | -NA- | -NA- |
| 0340 | 327.3 (11,558) | 1000 | 0.63 (1.38) | -NA- | -NA- |
| 0353 | 323.0 (11,405) | 830 | 0.51 (1.13) | -NA- | -NA- |
| 0418 | 323.0 (11,405) | 610 | 0.38 (0.831) | -NA- | -NA- |
| 0436 | 340.2 (12,014) | 450 | 0.29 (0.646) | -NA- | -NA- |
| 0450 | 340.2 (12,014) | 350 | 0.23 (0.502) | -NA- | -NA- |
| 0500 | 198.7 ( 7,016) | 290 | 0.11 (0.243) | -NA- | -NA- |
| 0530 | 198.9 ( 7,025) | 165 | 0.063(0.138) | -NA- | -NA- |
| 0600 | 198.9 ( 7,025) | 100 | 0.038(0.084) | -NA- | -NA- |

(1) dscf = dry cubic feet per hour at 20°C, 103 kPa (29.92" Hg)

(2) lb/h as $NO_2$ = $\frac{\text{ppm } NO_x \times \text{Molecular weight of } NO_2 \times 6.242 \times 10^{-8} \times Qsd}{24.04}$

Example 8

The same pilot abatement unit described in Example 7 was used in this example. For this test, however, the catalyst used in Example 7 was replaced by about 45.4 kg (100 lbs.) of the same type catalyst as used in Example 7 except that, instead of fresh catalyst, catalyst that had become spent in a commercial hydrocarbon conversion process was used.

The test was conducted with a smaller batch of nitrate-containing catalyst in the calciner. The results of this test are summarized in Table VIII.

The abatement catalyst was operated at about 232°C to 400°C in examples 7 and 8.

TABLE VIII: (Example 8)

EPA Method No. 7

| Elapsed Time | Pilot Plant Inlet: Gas Flow Rate $m^3/h$ (dscf/h)(1) | Pilot Plant Inlet: $NO_x$ ppm dry | Pilot Plant Inlet: $NO_x$ Kg/h (lb/h)(2) | Pilot Plant Outlet: $NO_x$ ppm dry | Pilot Plant Outlet: $NO_x$ Kg/h (lb/h)(2) |
|---|---|---|---|---|---|
| 0034 | 238.8 (8,434) | 2.3 | 0.0009(0.002) | 0.7 | 0.0004(0.001) |
| 0100 | 237.9 (8,400) | 31.5 | 0.015 (0.032) | 21.7 | 0.01 (0.022) |
| 0130 | 326.4 (11,525) | 143.0 | 0.09 (0.197) | 115.0 | 0.07 (0.158) |
| 0200 | 334.1 (11,798) | 380.0 | 0.24 (0.536) | 319.5 | 0.20 (0.450) |
| 0230 | 336.6 (11,888) | 715.4 | 0.46 (1.02) | 4.3 | 0.003 (0.006) |
| 0300 | 330.2 (11,660) | 1027.8 | 0.65 (1.43) | 0.0 | 0.0004(0.001) |
| 0330 | 358.3 (12,652) | 1193.8 | 0.82 (1.80) | 3.8 | 0.003 (0.006) |
| 0400 | 353.0 (12,465) | 1086.1 | 0.73 (1.62) | 11.3 | 0.008 (0.017) |
| 0430 | 363.1 (12,823) | 913.0 | 0.64 (1.40) | 0.0 | 0.0004(0.001) |
| 0500 | 360.9 (12,746) | 628.3 | 0.43 (0.957) | 0.0 | 0.0004(0.001) |
| 0530 | 356.8 (12,601) | 415.4 | 0.28 (0.625) | 0.0 | 0.0004(0.001) |
| 0600 | 350.4 (12,374) | 221.5 | 0.15 (0.327) | 29.4 | 0.02 (0.043) |
| 0630 | 347.2 (12,260) | 150.3 | 0.10 (0.220) | 81.2 | 0.05 (0.119) |

(1) dscf = dry cubic feet per hour at 20°C, 103 kPa (29.92" Hg)

(2) lb/h as $NO_2$ = $\frac{\text{ppm } NO_x \times \text{Molecular weight of } NO_2}{24.04} \times 6.242 \times 10^{-8} \times Qsd$

Example 9

In this example a 79.5 liter/day (0.5 barrel per day) fluid catalytic cracking pilot plant was used as a source of $NO_x$-contaminated exhaust gas. A slip-stream of the flue gas from the regenerator was taken, mixed with about a stoichiometric amount of ammonia and passed through a 100 $cm^3$ bed of spent commercial NiZSM-5 catalyst as used for Example 8. The abator bed temperature was varied from 282°C to 413°C. The results of this example are shown in Table IX.

TABLE IX (Example 9

FCC-flue gas treatment

| GHSV, V/V | Temp. °C | $NO_x$, ppm Inlet | $NO_x$, ppm Outlet |
|---|---|---|---|
| 3200 $h^{-1}$ | 282 | 550 | 200 |
| 3200 | 282 | 550 | 150 |
| 2900 | 391 | 600 | 200 |
| 2900 | 399 | 600 | 200 |
| 1500 | 407 | 600 | 100 |
| 1500 | 413 | 600 | 50 |

## Claims

1. A process for treating an industrial exhaust gas contaminated with $NO_x$ by mixing the exhaust gas and ammonia, in an amount to satisfy approximately the stoichiometric requirement for reduction of the $NO_x$ by $NH_3$, and passing the mixture over a zeolite catalyst at 200 to 600°C to reduce the $NO_x$ content, the zeolite having a silica to alumina ratio of at least 50 and a Constraint Index of 1 to 12, characterised by using a spent organic conversion zeolite catalyst.

2. The process of claim 1 further characterised in that the zeolite is selected from the group of ZSM-5, ZSM-11, ZSM-12, ZSM-21, ZSM-23, ZSM-35, ZSM-38 and ZSM-48.

3. The process of claim 2 further characterised in that the zeolite is in the hydrogen form.

4. The process of claim 2 further characterised in that the zeolite contains from 2 ppm to 1 wt% of a platinum group metal.

5. The process of any of claims 1 to 3 further characterised in that the zeolite contains up to 2 wt% nickel and zeolite is ZSM-5.

6. The process of any preceding claim further characterised in that the catalyst is injected into the industrial exhaust gas.

## Patentansprüche

1. Verfahren zur Behandlung eines mit $NO_x$ verunreinigten industriellen Abgases durch Vermischung des Abgases mit Ammoniak in einer Menge, um den stöchiometrischen Bedarf für die Reduzierung von $NO_x$ durch $NH_3$ annähernd zu erfüllen, und Leiten dieser Mischung bei 200 bis 600°C über einen Zeolithkatalysator, um den $NO_x$-Gehalt zu reduzieren, wobei der Zeolith ein Siliciumdioxid/Aluminiumoxid-Verhältnis von mindestens 50 und einen Zwangsindex von 1 bis 12 aufweist, gekennzeichnet durch Verwendung eines verbrauchten Zeolithkatalysators für organische Umwandlungen.

2. Verfahren nach Anspruch 1, weiterhin dadurch gekennzeichnet, daß der Zeolith aus der Gruppe ZSM-5, ZSM-11, ZSM-12, ZSM-21, ZSM-23, ZSM-35, ZSM-38 und ZSM-48 ausgewählt ist.

3. Verfahren nach Anspruch 2, weiterhin dadurch gekennzeichnet, daß der Zeolith in der Wasserstofform vorliegt.

4. Verfahren nach Anspruch 2, weiterhin dadurch gekennzeichnet, daß der Zeolith von 2 ppm bis 1 Gew.-% eines Metalls der Platingruppe enthält.

5. Verfahren nach einem der Ansprüche 1 bis 3, weiterhin dadurch gekennzeichnet, daß der Zeolith bis zu 2 Gew.-% Nickel enthält und der Zeolith ZSM-5 ist.

6. Verfahren nach einem der vorstehenden Ansprüche, weiterhin dadurch gekennzeichnet, daß der Katalysator in das industrielle Abgas eingeblasen wird.

## Revendications

1. Un procédé de traitement d'un rejet gazeux industriel pollué avec des $NO_x$ par mélange du rejet gazeux avec de l'ammoniac, dans une quantité satisfaisant approximativement la stoechiométrie nécessaire à la réduction des $NO_x$ par $NH_3$, et par passage du mélange sur un catalyseur à base de zéolite à une température de 200 à 600°C afin de réduire la teneur en $NO_x$, la zéolite ayant un rapport silice/alumine d'au moins 50 et un indice de contrainte de 1 à 12, caractérisé en ce que le catalyseur est un catalyseur de conversion organique à base de zéolite usé.

2. Procédé selon la revendication 1, caractérisé de plus en ce que la zéolite est choisie parmi le groupe consistant en: ZSM-5, ZSM-11, ZSM-12, ZSM-21, ZSM-23, ZSM-35, ZSM-38 et ZSM-48.

3. Procédé selon la revendication 2, dans lequel la zéolite est sous forme hydrogénée.

4. Procédé selon la revendication 2, dans lequel la zéolite contient de 2 ppm à 1% en poids d'un métal du groupe du platine.

5. Procédé selon l'une quelconque des revendications 1 à 3, dans lequel la zéolite contient jusqu'à 2% en poids de nickel et la zéolite est la ZSM-5.

6. Procédé selon l'une quelconque des revendications précédentes, dans lequel le catalyseur est injecté dans le rejet gazeux industriel.

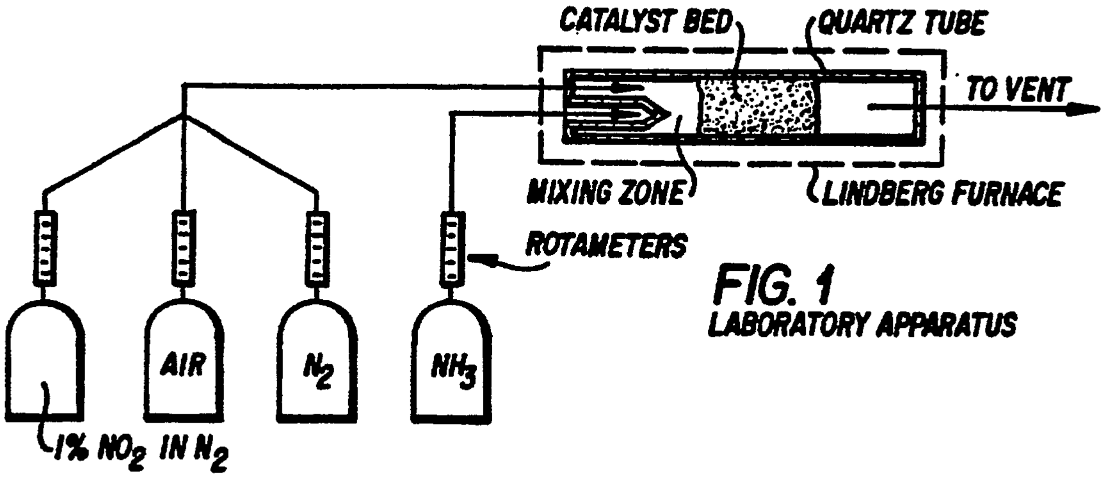


FIG. 1
LABORATORY APPARATUS

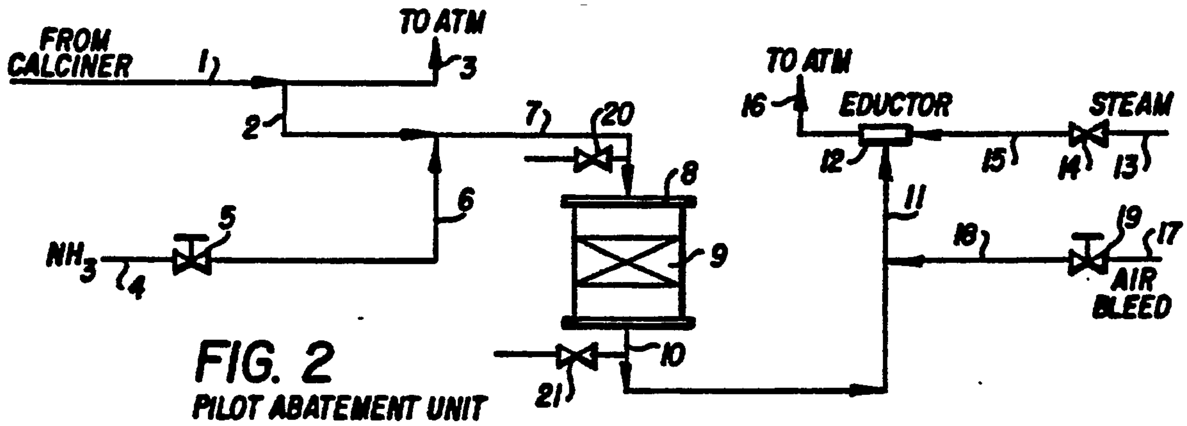


FIG. 2
PILOT ABATEMENT UNIT

FIG. 3
PILOT ABATEMENT, EXAMPLE 7

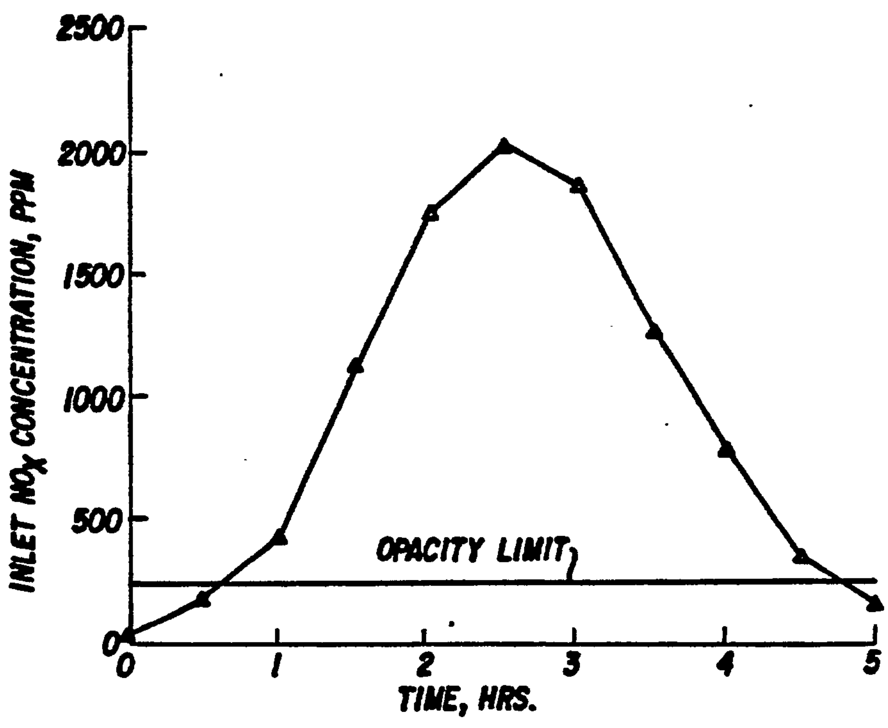

FIG. 4
PILOT ABATEMENT, EXAMPLE 7

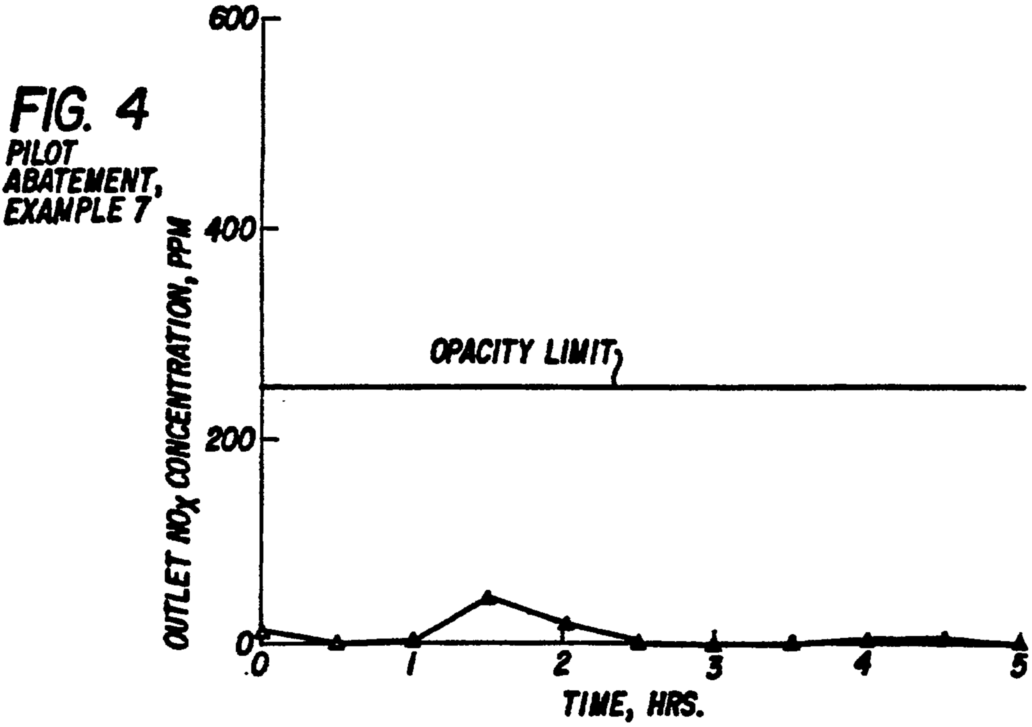


FIG. 5
PILOT ABATEMENT, EXAMPLE 8

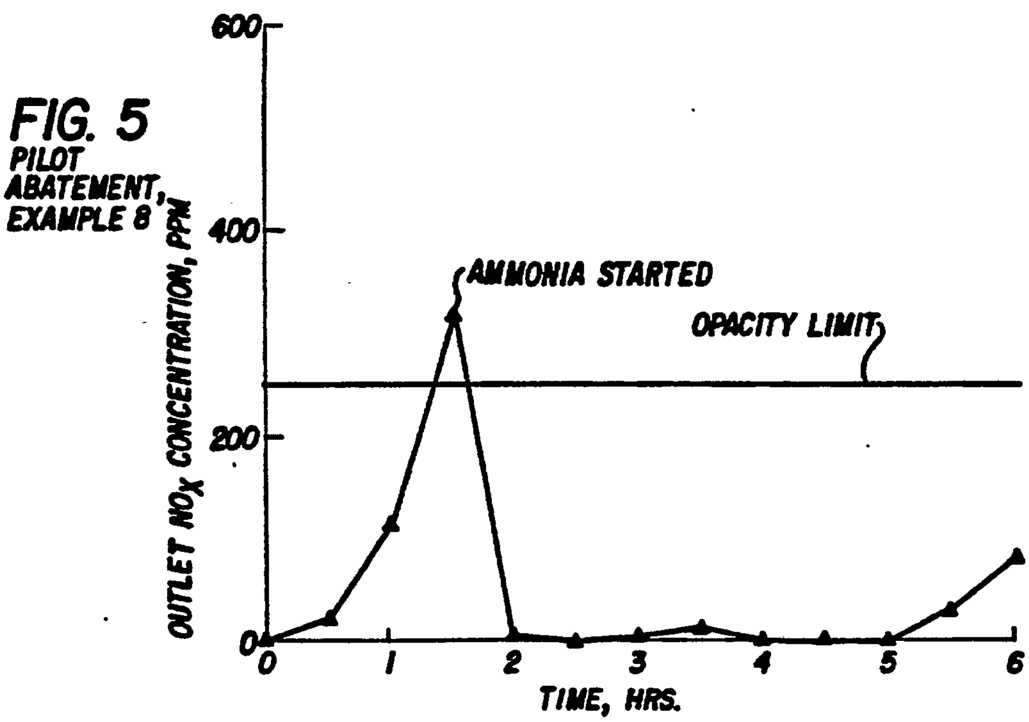

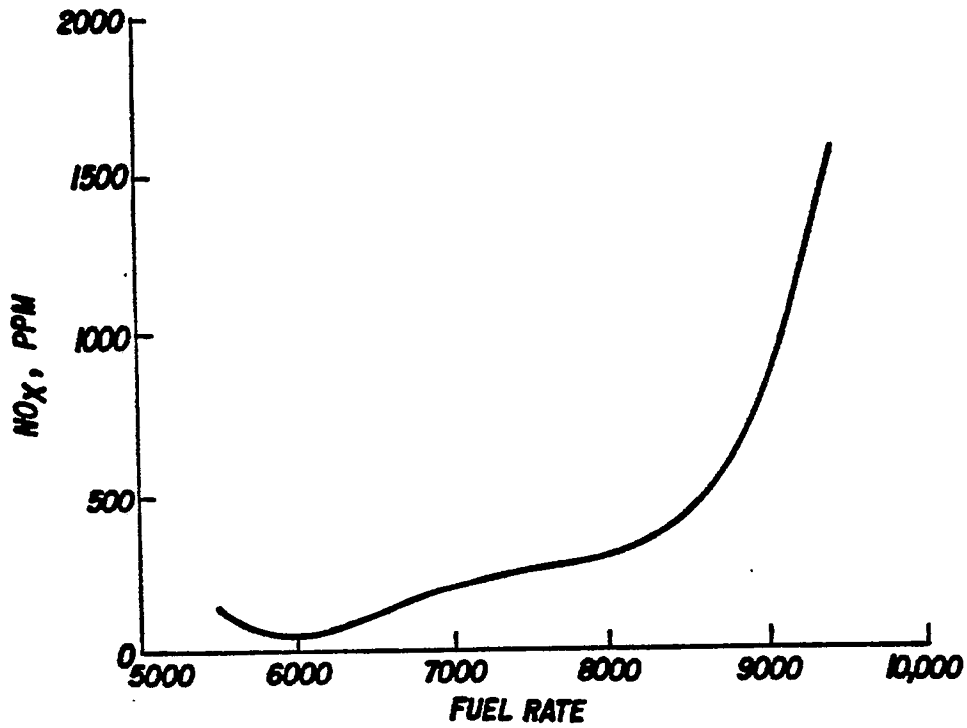


FIG. 6
EMISSIONS